# EUROPÄISCHE PATENTANMELDUNG

(11) **EP 2 251 606 A2**
(43) Veröffentlichungstag der Anmeldung: **17.11.2010**
(21) Anmeldenummer: 10161382.6
(22) Anmeldetag: 29.04.2010
(51) Int. Cl.: F24C 3/08

(54) **Gaszuführung für einen Gasbrenner**

(30) Priorität: 15.05.2009 EP 09290367
(71) Anmelder: BSH Bosch und Siemens Hausgeräte GmbH, 81739 München (DE)
(72) Erfinder: Cadeau, Christophe, 67100, Strasbourg (FR); Naumann, Jörn, 77770, Durbach (DE)

(57) **Zusammenfassung**

Die vorliegende Erfindung betrifft eine Baugruppe (1) zur Zuführung von Brenngas für einen Gasbrenner einer Gaskochstelle oder eines Gasbackofens mit einem Gasverbindungsrohr (2), das an seinem Gaseingang mit einem Gasventil verbindbar ist und an seinem Gasausgang eine gasdichte Verbindung mit einer Düse (3) aufweist, welche Bestandteil einer Düse-Injektor-Einheit ist, **dadurch gekennzeichnet, dass** ein Düsenhalter (4) vorgesehen ist, der zumindest teilweise im Inneren des Gasverbindungsrohres (2) angeordnet ist, und der mit diesem durch Verformen des Gasverbindungsrohres (2) gasdicht verbunden ist, und dass der Düsenhalter (4) am gasausgangsseitgen Ende ein Gewinde aufweist, durch welches die Düse (3) über eine gasdichte Schraubverbindung am Düsenhalter (4) befestigt ist. Des Weiteren betrifft die vorliegende Erfindung ein Verfahren zur Herstellung einer solchen Baugruppe (1).

## Beschreibung

Die vorliegende Erfindung betrifft eine Baugruppe zur Brenngaszuführung zu einem Gasbrenner einer Gaskochstelle oder eines Gasbackofens, mit einem Gasverbindungsrohr, das an seinem Gaseingang mit einer Gasversorgung verbunden ist und an seinem Gasausgang eine gasdichte Verbindung mit einer Düse aufweist, aus der das Brenngas austritt, sowie ein Verfahren zur Herstellung einer solchen Baugruppe.

Zur Verbindung eines Gasverbindungsrohres mit einer Düse ist es bekannt, das Gasverbindungsrohr mit einem Gewinde zu versehen. Dabei kann auf ein vorgeschnittenes oder auf ein beim Einschrauben der Düse selbstschneidendes Gewinde zurückgegriffen werden. Beide Möglichkeiten bereiten ja nach Material des Gasverbindungsrohres unterschiedlich große fertigungstechnische Schwierigkeiten. Das direkte Einschrauben der Düse in das Gasverbindungsrohr ist z.B. in der Druckschrift US 5,735,685 gezeigt.

Des Weiteren ist es bekannt, eine Düse direkt mit dem Gasverbindungsrohr zu verpressen. Diese Möglichkeit der Erzeugung einer gasdichten Verbindung zwischen dem Gasverbindungsrohr und der Düse erfordert eine hohe fertigungstechnische Präzision und birgt den Nachteil, dass es sich um eine nicht lösbare Verbindung handelt und die Düse nicht mehr ausgewechselt werden kann.

In der Druckschrift US 5,332,161 ist ein das Gasverbindungsrohr und die Düse außen umhüllendes Verbindungselement gezeigt.

Der vorliegenden Erfindung liegt die Aufgabe zugrunde, eine gegenüber dem Stand der Technik weiter verbesserte Baugruppe zur Brenngaszuführung sowie ein Verfahren zur Herstellung einer solchen Baugruppe zur Verfügung zu stellen.

Die gestellte Aufgabe wird für die Baugruppe erfindungsgemäß dadurch gelöst, dass ein Düsenhalter vorgesehen ist, der zumindest teilweise im Inneren des Gasverbindungsrohres angeordnet ist, und der mit diesem durch Verformen des Gasverbindungsrohres gasdicht verbunden ist, und dass der Düsenhalter am gasausgangsseitgen Ende ein Gewinde aufweist, mittels welchem die Düse über eine gasdichte Schraubverbindung am Düsenhalter befestigt ist.

Zweck der vorliegenden Erfindung ist es, eine vorgefertigte Baugruppe zu erhalten, die vor dem Einbau in die Gaskochstelle oder in den Gasbackofen auf Gasdichtheit überprüft werden kann und deren Düse wechselbar ist.

Bevorzugt ragt ein Teil des Düsenhalters über das gasausgangsseitige Ende des Gasverbindungsrohres hinaus.

Besonders bevorzugt weist der hinausragende Teil des Düsenhalters zumindest zum Teil eine mehrkantige, insbesondere eine 4-kantige oder eine 6-kantige Außenkontur auf. Diese kann vorteilhafterweise zur Fixierung des Düsenhalters während des Einschraubens der Düse dienen.

Vorteilhafterweise besitzt die Düse eine mehrkantige, insbesondere eine 4-kantige oder eine 6-kantige Außenkontur.

Mit besonderem Vorteil weist der hinausragende Teil des Düsenhalters einen Befestigungsabschnitt auf. Der Befestigungsabschnitt dient zur Befestigung der Baugruppe am Gasbrenner. Dabei wird der Befestigungsabschnitt z.B. mittels eines Bügels oder mittels einer Federklammer in eine Prismaaufnahme am Gasbrenner gespannt.

Bevorzugt besitzt der Befestigungsabschnitt eine zylindrische Außenkontur.

Gemäß einer besonderen Ausgestaltung der Erfindung ist der hinausragende Teil des Düsenhalters gewinkelt, derart, dass der Eingangsbereich des Düsenhalters mit dem Teil des Düsenhalters, der die Düse enthält, einen Winkel einschließt. Bevorzugt ist dieser Winkel als rechter Winkel ausgeführt. Die Ausformung des Düsenhalters kann so mit besonderem Vorteil auf die Einbausituation bzw. auf das Platzangebot am Gasbrenner abgestimmt sein.

Gemäß einer anderen vorteilhaften Ausgestaltung der Erfindung ist der hinausragende Teil des Düsenhalters geradlinig ausgebildet, derart, dass der Düsenhalter und das Gasverbindungsrohr koaxial zueinander angeordnet sind.

Bevorzugt ist die Verformung des Gasverbindungsrohres zum Zwecke der gasdichten Verbindung desselben mit dem Düsenhalter durch ringförmiges plastisches Eindrücken des Gasverbindungsrohres, insbesondere durch Krimpen erzeugt. Diese Verbindungstechnik ist vorteilhaft einfach und stellt eine gasdichte Verbindung sicher.

Besonders bevorzugt ist die Verformung des Gasverbindungsrohres zum Zwecke der gasdichten Verbindung desselben mit dem Düsenhalter durch mehrmaliges, axial versetztes, ringförmiges plastisches Eindrücken, insbesondere durch mehrmaliges, axial versetztes Krimpen des Gasverbindungsrohres erzeugt.

Gemäß einer vorteilhaften Ausgestaltung der Erfindung ist das Gasverbindungsrohr aus einer Aluminiumlegierung gefertigt. Hier zeigen sich die Vorteile der vorliegenden Erfindung besonders deutlich, da mit der Erfindung z.B. auf das Schneiden eines Gewindes in ein Aluminiumrohr verzichtet werden kann. Dies stellt eine erhebliche Verbesserung dar, da sich das Gewindeschneiden in Aluminium entweder als äußerst aufwändig oder als nicht befriedigend hinsichtlich der Präzision, die für eine gasdichte Verbindung auf jeden Fall erforderlich wäre, erwiesen hat. Der Einsatz von Aluminium für das Gasverbindungsrohr ist des Weiteren aufgrund seiner Biegsamkeit und weiterer Verarbeitungseigenschafen sowie aufgrund seines geringen Gewichts besonders vorteilhaft. Möglich ist jedoch auch die Verwendung von Kupfer als Werkstoff für das Gasverbindungsrohr.

Gemäß einer weiteren vorteilhaften Ausgestaltung der Erfindung ist der Düsenhalter aus einer Messinglegierung gefertigt. Der Vorteil des Werkstoffes Messing ergibt sich an dieser Stelle aus der im Gegensatz zu Aluminium deutlich besseren Eignung von Messing für das Anbringen eines vorgeschnittenen Gewindes zum Einschrauben der Düse.

Verfahrensseitig wird die gestellte Aufgabe durch ein Verfahren gelöst, das folgende Schritte aufweist:
a) ein Düsenhalter wird an einem Ende mit einem Gewinde versehen,
b) der Düsenhalter wird so ins Innere eines Gasverbindungsrohres eingesteckt, dass das mit dem Gewinde versehene Ende an der Gasausgangsseite des Gasverbindungsrohres liegt,
c) das Gasverbindungsrohr wird so verformt, dass zwischen diesem und dem Düsenhalter eine gasdichte Verbindung ausgebildet wird,
d) eine Düse wird in das Gewinde eingeschraubt, wobei eine gasdichte Schraubverbindung erzeugt wird und
e) die Baugruppe wird einer Prüfung auf Gasdichtheit unterzogen.
Erst nach der Prüfung auf Gasdichtheit wird die erfindungsgemäße Baugruppe am Gasbrenner befestigt und das Gasverbindungsrohr an seinem Gaseingang mit einer Gasversorgung verbunden.

Der besondere Vorteil der vorliegenden Erfindung ist zum einen in der soeben beschriebenen Tatsache zu sehen, dass die Prüfung auf Gasdichtheit vor dem Einbau der Baugruppe in eine Gaskochstelle oder in einen Gasbackofen stattfindet. Zum anderen ist es von besonderem Vorteil, dass die Düse über eine Schraubverbindung auf einfache Weise wechselbar bleibt.

Die Erfindung sowie weitere Ausgestaltungen der Erfindung werden im Folgenden anhand der in den Figuren dargestellten Ausführungsbeispiele näher erläutert. Es zeigen:
- Figur 1: eine perspektivische Ansicht einer erfindungsgemäßen Baugruppe mit geradem Düsenhalter,
- Figur 2: einen axialen Schnitt durch eine erfindungsgemäße Baugruppe gemäß Figur 1,
- Figur 3: eine perspektivische Ansicht einer erfindungsgemäßen Baugruppe mit gewinkeltem Düsenhalter,
- Figur 4: eine Düse-Injektor-Einheit mit angeklemmtem, geradem Düsenhalter.

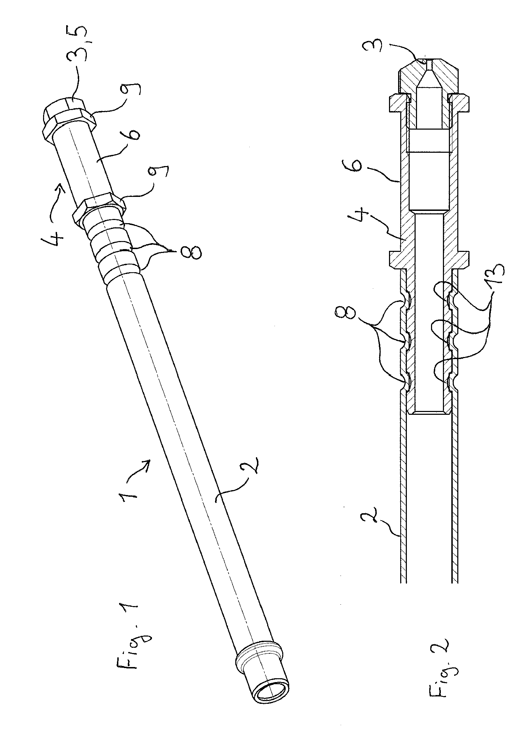

Im Einzelnen zeigt die Figur 1 eine perspektivische Ansicht einer erfindungsgemäßen Baugruppe 1 mit einem geraden Düsenhalter 4, in den eine Düse 3 eingeschraubt ist. Die Düse 3 weist eine Sechskant-Außenkontur 5 auf, an der ein Schraubenschlüssel angesetzt werden kann. Zum Halten des Düsenhalters 4 während des Schraubvorgangs ist am Düsenhalter 4 mindestens eine weitere Sechskant-Außenkontur 9 angebracht. Die Bezugsziffer 8 bezeichnet durch das Krimpen entstandene Vertiefungen, die das Gasverbindungsrohr 2 umlaufen. Der Düsenhalter 4 wird durch die durch das Krimpen im Inneren des Gasverbindungsrohres 2 entstandenen Verformungen (in den Figuren nicht sichtbar) mit dem Gasverbindungsrohr 2 gasdicht verbunden. Der mit der Bezugsziffer 6 bezeichnete Bereich ist ein Befestigungsabschnitt 6, der zum Befestigen der Baugruppe 1 an einem Gasbrenner dient.

Die Figur 2 zeigt einen axialen Schnitt durch eine erfindungsgemäße Baugruppe 1 gemäß Figur 1 im Bereich des Düsenhalters 4, wobei man hier erkennen kann, wie weit der Düsenhalter 4 in das Gasverbindungsrohr 2 hinein ragt. Der Düsenhalter 4 besitzt in dem in das Gasverbindungsrohr 2 eingesteckten Abschnitt drei umlaufende Rillen 13. Genau im Bereich dieser Rillen 13 ist das Gasverbindungsrohr 2 von außen plastisch eingedrückt, sodass eine dauerhafte formschlüssige Verbindung zwischen Gasverbindungsrohr 2 und Düsenhalter 4 entsteht. Ebenso zu erkennen ist, wie die Düse 3 an dem gasausgangsseitigen Ende des Düsenhalters 4 in ein am Düsenhalter 4 vorgesehenes Gewinde eingeschraubt ist.

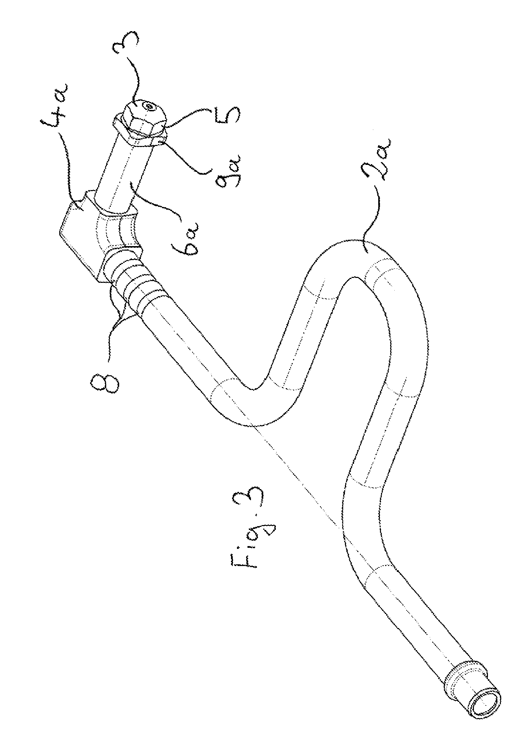

Die Figur 3 zeigt eine perspektivische Ansicht einer erfindungsgemäßen Baugruppe 1 mit einem gewinkelten Düsenhalter 4a. Die Düse 3 weist ebenfalls eine Sechskant-Außenkontur 5 auf, während der Düsenhalter 4a hier - im Unterschied zur Figur 1 - eine Vierkant-Außenkontur 9a aufweist. Diese Vierkant-Außenkontur 9a dient als Ansatzfläche für ein Werkzeug zum Festhalten des Düsenhalters 4a während des Vorgangs des Einschraubens der Düse 3. Der Befestigungsabschnitt 6a liegt in diesem Ausführungsbeispiel in seiner Längsrichtung im rechten Winkel zur Längsachse des Gasverbindungsrohres 2a. Dadurch kann bei engen Platzverhältnissen der Einbau der Baugruppe 1 in eine Gaskochstelle oder einen Gasbackofen besser erfolgen. Darüber hinaus ist das Gasverbindungsrohr 2a mit etwas Abstand zum Düsenhalter 4a in der Regel gebogen ausgeführt. Dies ist meist erforderlich, um das Gasverbindungsrohr 2 in die verschiedenen Bauformen der Gaskochstellen und Gasbacköfen mit geringem eigenem Platzbedarf zu integrieren.

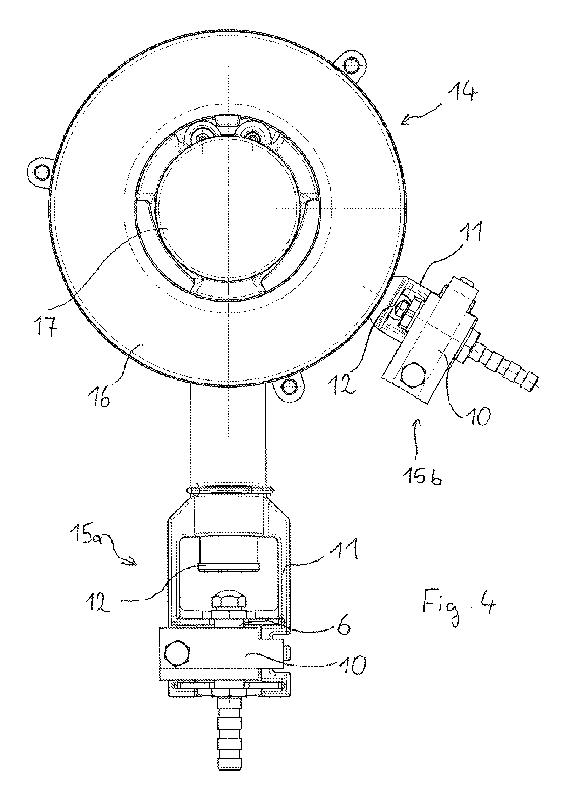

Die Figur 4 zeigt einen Gasbrenner 14 mit zwei Düse-Injektor-Einheiten 15a, 15b und jeweils einem angeklemmtem, geraden Düsenhalter 4 gemäß Fig. 1 und 2. Die in der Zeichnung unten angeordnete Düse-Injektor-Einheit 15a versorgt einen Außenbrenner 16 des Gasbrenners 14 mit Gas-Luft-Gemisch, während die in der Zeichnung rechts befindliche kleinere Düse-Injektor-Einheit 15b zur Versorgung eines Innenbrenners 17 des Gasbrenners 14 dient. Für jede der Düse-Injektor-Einheiten 15a, 15b gilt: Der Befestigungsabschnitt 6 ist mit Hilfe einer Klemmvorrichtung 10 so an einem Halter 11 der Düse-Injektor-Einheit befestigt, dass zwischen dem Austritt des Gases aus der Düse 3 und dem Eintritt des Gas-Luft-Gemisches in einen Injektor 12 eine freie Strömungsstrecke vorgesehen ist. Der Injektor 12 ist von einem Venturi-Rohr gebildet.

## Patentansprüche

1. Baugruppe (1) zur Brenngaszuführung zu einem Gasbrenner einer Gaskochstelle oder eines Gasbackofens, mit einem Gasverbindungsrohr (2), das an seinem Gaseingang mit einem Gasventil verbindbar ist und an seinem Gasausgang eine gasdichte Verbindung mit einer Düse (3) aufweist, welche Bestandteil einer Düse-Injektor-Einheit ist, **dadurch gekennzeichnet, dass** ein Düsenhalter (4) vorgesehen ist, der zumindest teilweise im Inneren des Gasverbindungsrohres (2) angeordnet ist, und der mit diesem durch Verformen des Gasverbindungsrohres (2) gasdicht verbunden ist, und dass der Düsenhalter (4) am gasausgangsseitgen Ende ein Gewinde aufweist, mittels welchem die Düse (3) über eine gasdichte Schraubverbindung am Düsenhalter (4) befestigt ist.

2. Baugruppe (1) nach Anspruch 1, **dadurch gekennzeichnet, dass** ein Teil des Düsenhalters (4) über das gasausgangsseitige Ende des Gasverbindungsrohres (2) hinausragt.

3. Baugruppe (1) nach Anspruch 2, **dadurch gekennzeichnet, dass** der hinausragende Teil des Düsenhalters (4) zumindest zum Teil eine mehrkantige, insbesondere eine 4-kantige oder eine 6-kantige Außenkontur (9) aufweist.

4. Baugruppe (1) nach einem der Ansprüche 1 bis 3, **dadurch gekennzeichnet, dass** die Düse (3) eine mehrkantige, insbesondere eine 4-kantige oder eine 6-kantige Außenkontur besitzt.

5. Baugruppe (1) nach einem der Ansprüche 2 bis 4, **dadurch gekennzeichnet, dass** der hinausragende Teil des Düsenhalters einen Befestigungsabschnitt (6) aufweist.

6. Baugruppe (1) nach Anspruch 5, **dadurch gekennzeichnet, dass** der Befestigungsabschnitt (6) eine zylindrische Außenkontur besitzt.

7. Baugruppe (1) nach einem der Ansprüche 2 bis 6, **dadurch gekennzeichnet, dass** der hinausragende Teil des Düsenhalters (4) gewinkelt ist, derart dass der Eingangsbereich des Düsenhalters (4) mit dem Teil des Düsenhalters (4), der die Düse enthält, einen Winkel einschließt.

8. Baugruppe (1) nach einem der Ansprüche 2 bis 6, **dadurch gekennzeichnet, dass** der hinausragende Teil des Düsenhalters (4) geradlinig ausgebildet ist, derart dass der Düsenhalter (4) und das Gasverbindungsrohr (2) koaxial zueinander angeordnet sind.

9. Baugruppe (1) nach einem der Ansprüche 1 bis 8, **dadurch gekennzeichnet, dass** die Verformung des Gasverbindungsrohres (2) zum Zwecke der gasdichten Verbindung desselben mit dem Düsenhalter (4) durch ringförmiges plastisches Eindrücken, insbesondere durch Krimpen des Gasverbindungsrohres (2) erzeugt ist.

10. Baugruppe (1) nach Anspruch 9, **dadurch gekennzeichnet, dass** die Verformung des Gasverbindungsrohres (2) zum Zwecke der gasdichten Verbindung desselben mit dem Düsenhalter (4) durch mehrmaliges, axial versetztes, ringförmiges plastisches Eindrücken, insbesondere durch mehrmaliges, axial versetztes Krimpen des Gasverbindungsrohres (2) erzeugt ist.

11. Baugruppe (1) nach einem der Ansprüche 1 bis 10, **dadurch gekennzeichnet, dass** das Gasverbindungsrohr (2) aus einer Aluminiumlegierung gefertigt ist.

12. Baugruppe (1) nach einem der Ansprüche 1 bis 11, **dadurch gekennzeichnet, dass** der Düsenhalter (4) aus einer Messinglegierung gefertigt ist.

13. Verfahren zur Herstellung einer Baugruppe (1) zur Zuführung von Brenngas für einen Gasbrenner einer Gaskochstelle oder eines Gasbackofens, das folgende Schritte aufweist:
a) ein Düsenhalter (4) wird an einem Ende mit einem Gewinde versehen,
b) der Düsenhalter (4) wird so ins Innere eines Gasverbindungsrohres (2) eingesteckt, dass das mit dem Gewinde versehene Ende an der Gasausgangsseite des Gasverbindungsrohres (2) liegt,
c) das Gasverbindungsrohr (2) wird so verformt, dass zwischen diesem und dem Düsenhalter (4) eine gasdichte Verbindung ausgebildet wird,
d) eine Düse (3) wird in das Gewinde eingeschraubt, wobei eine gasdichte Schraubverbindung erzeugt wird und
e) die Baugruppe (1) wird einer Prüfung auf Gasdichtheit unterzogen.
